# EUROPÄISCHE PATENTANMELDUNG

(11) **EP 0 702 183 A2**
(43) Veröffentlichungstag der Anmeldung: **20.03.1996**
(21) Anmeldenummer: 95250223.5
(22) Anmeldetag: 14.09.1995
(51) Int. Cl.: F16L 21/03, F16L 9/08

(54) **Betonerzeugnis mit einem innen- oder aussenliegenden Absatz**

(30) Priorität: 14.09.1994 IT BL940011
(71) Anmelder: COLLE S.P.A., I-32020 Lentiai (IT)
(72) Erfinder: Colle, Giuseppe, I-32020 Lentiai (IT)
(74) Vertreter: Wablat, Wolfgang, Dr.Dr.

(57) **Zusammenfassung**

Die Erfindung betrifft Betonerzeugnisse mit einem Verbindungsabschnitt in Form eines ringförmigen innen- oder außenliegenden Absatzes. Es werden Betonerzeugnisse beschrieben, welche die Verwendung preiswerter und einfach zu beschaffender Dichtungen gestatten und eine perfekte Abdichtung und Dämpfung der Verbindungsabschnitte (A bzw. B) sicherstellen. Ein erfindungsgemäßes Betonerzeugnis ist dadurch gekennzeichnet, daß der innen- bzw. außenliegende Absatz mit einer Kehle (3, 13) versehen ist, in die eine Ringdichtung (C, C') einlegbar ist.

## Beschreibung

Die vorliegende Erfindung betrifft ein Betonerzeugnis mit einem Verbindungsabschnitt in Form eines ringförmigen, innen- oder außenliegenden Absatzes.

Betonerzeugnisse, insbesondere Betonrohre sind zur Verbindung üblicherweise mit komplementär ausgebildeten Verbindungsabschnitten oder Einsteckenden versehen, die aus innen- bzw. außenliegenden, ringförmigen Absätzen bestehen. Auf diese Weise können mehrere Rohre einer Rohrleitung oder mehrere Elemente eines Kontrollschachtes oder auch ein Rohrelement mit dem Anfangs- oder Endelement eines Schachtes verbunden werden.

In allen Fällen sind ein innenliegender und ein außenliegender Verbindungsabschnitt vorhanden, die eine Zentrierung der zu verbindenden Betonerzeugnisse ermöglichen, jedoch regelmäßig keine perfekte Abdichtung an der Verbindungsstelle gewährleisten.

Insbesondere bei Betonrohren bedingt die Form der Verbindungsabschnitte mitunter eine Schwächung der Rohrwandung, wenn diese zur Ausbildung eines umlaufenden Verbindungsabsates reduziert wird. Darüber hinaus unterliegt zumindest eines der Betonrohres im Bereich der Verbindungsstelle einer mechanischen Beanspruchung, die angesichts der Schwächung der Wandung leicht zu einer Rißbildung und zu einem Bruch führen kann.

An der Verbindungsstelle angeordnete Dichtungen dienen neben der hydraulischen Abdichtung auch dazu, Schläge und andere auf die beiden verbundenen Betonerzeugnisse einwirkende Kräfte aufzunehmen, wobei eine unmittelbare Berührung der in ihrer Stärke geschwächten Wandungen verhindert wird.

Um diese doppelte Funktion zu erfüllen weisen die derzeit insbesondere bei der Verbindung von Schachtelementen verwendeten Dichtungen sehr komplexe Formen auf. Regelmäßig sind speziell geformte Ausnehmungen erforderlich, die als Sitz für die Dichtung in den Verbindungsabschnitten ausgespart werden müssen. Dies ist mit beträchtlichen Kosten verbunden. Die richtige Positionierung einfacher Dichtungen gestaltet sich dagegen schwierig, mit der Folge, daß vielfach keine zufriedenstellende Abdichtung und Dämpfung der verbundenen Betonerzeugnisse erzielt wird.

Der vorliegenden Erfindung liegt daher die Aufgabe zugrunde, Betonerzeugnisse der eingangs genannten Art bereitzustellen, welche die Verwendung preiswerter und einfach zu beschaffender Dichtungen gestatten und eine perfekte Abdichtung und Dämpfung ihrer Verbindungsabschnitte sicherstellen.

Diese Aufgabe wird durch die kennzeichnenden Merkmale des Anspruchs 1 gelöst.

Das wesentliche Merkmal der vorliegenden Erfindung besteht darin, daß in dem innen- bzw. außenliegenden Absatz des Verbindungsabschnittes eine Kehle vorgesehen wird, in welche eine Ringdichtung einlegbar ist.

Derartige Dichtungen sind relativ preiswert und einfach zu beschaffen. Zudem stellt die erfindungsgemäße Lösung eine optimale Abdichtung der Verbindungsstelle sicher, wobei ein direkter Kontakt zwischen den geschwächten Wandungen der Verbindungsabschnitte vermieden und insoweit die Gefahr einer Rißbildung bzw. eines Bruches ausgeschlossen wird.

Eine weitere Aufgabe der vorliegenden Erfindung besteht darin, die Verbindung der einzelnen Betonerzeugnisse einfacher und schneller zu gestalten, indem die korrekte Positionierung der Dichtungen erleichtert wird. Diese Aufgabe wird dadurch gelöst, daß der außenliegende Absatz durch einen durchmesserreduzierten, konisch ausgebildeten Wandabschnitt gebildet ist.

Weitere vorteilhafte Ausgestaltungen der Erfindung sind in den Unteransprüchen gekennzeichnet.

Im folgenden wird die Erfindung anhand mehrerer Ausführungsbeispiele und mit Bezug auf die beiliegenden Zeichnungen näher erläutert. Es zeigen:
- Figur 1: eine schematische Schnittdarstellung der Verbindungsabschnitte zweier unter Verwendung einer Dichtung miteinander zu verbindender Betonerzeugnisse;
- Figur 2: eine schematische Schnittdarstellung der Verbindungsabschnitte gemäß Figur 1 im verbundenen Zustand; und
- Figur 3: eine schematische Schnittdarstellung der Verbindungsabschnitte zweier unter Verwendung von zwei Dichtungen miteinander zu verbindender Betonerzeugnisse gemäß eines zweiten Ausführungsbeispiels.

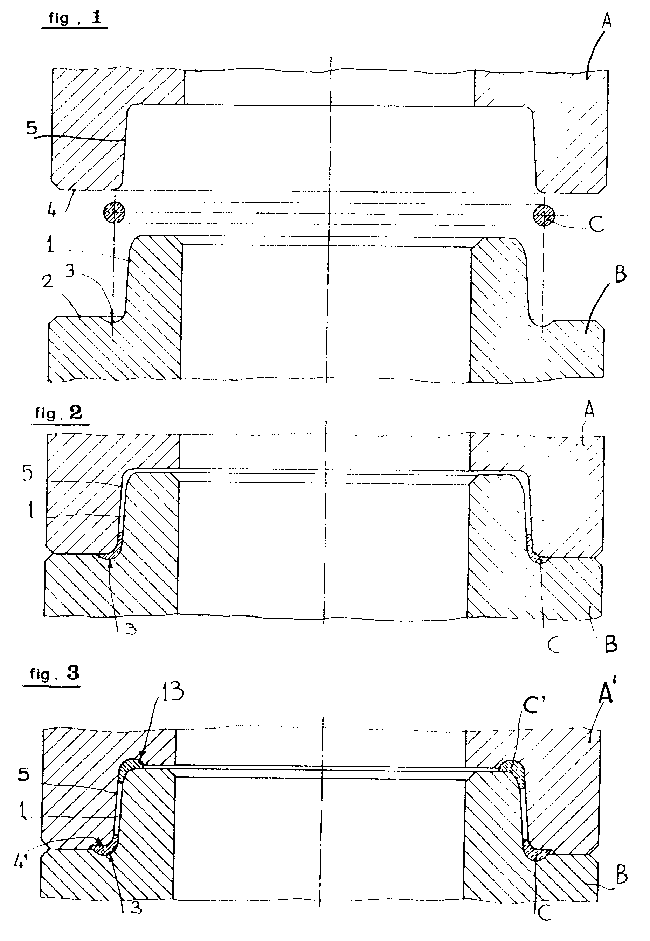

In Fig. 1 sind die Verbindungsabschnitte A und B zweier Betonerzeugnisse dargestellt, die unter Verwendung einer Dichtung C miteinander verbindbar sind.

Im Übergangsbereich zwischen dem durchmesserreduzierten Wandabschnitt 1 und dem Absatz 2 des Verbindungsabschnittes B ist eine Kehle 3 ausgebildet, die je nach Durchmesser des Erzeugnisses und des Durchmessers der zu verwendenden Dichtung C abgerundet und in geeigneter Weise bemessen ist
Die ringförmige Dichtung C wird zum Einlegen in die Kehle 3 konzentrisch auf den Wandabschnitt 1 aufgesteckt. Die Tiefe der Kehle 3 ist so bemessen, daß ein relativ großer Teil der Dichtung C über dem Absatz 2 hinaus vorsteht.

Beim Anschluß des oberen Betonerzeugnisses berührt dessen Verbindungsabschnitt A über die Stirnfläche 4 und den Wandabschnitt 5 die Dichtung C, die sich dabei, wie in Figur 2 gezeigt, verformt und an das Profil der Verbindung anpaßt.

Bei der Verformung wird ein Teilbereich der Dichtung C in die Kehle 3 gepreßt, ein anderer Teilbereich legt sich an die Stirnfläche 4 an, und ein weiterer Teilbereich gelangt zwischen die gegenüberliegenden Wandabschnitte 1 und 5. Dies setzt selbstverständlich das Vorhandensein eines ausreichenden Spieles zwischen den Wandabschnitten 1 und 5 voraus.

Die Ringdichtung C gewährleistet auf diese Weise eine perfekte Abdichtung der beiden verbundenen Betonerzeugnisse über deren gesamten Umfang.

Außerdem gewährleistet die Ringdichtung C, daß die gegenüberliegenden Wandabschnitte 1 und 5 der beiden verbundenen Betonerzeugnisse einen gleichmäßigen Abstand zueinander aufweisen. Hierdurch wird vermieden, daß diese relativ schwach ausgebildteten Wandabschnitte bei Stößen oder sonstigen auf die Betonerzeugnisse einwirkenden Kräften aneinander stoßen und dabei beschädigt werden.

In Verbindung mit einfachen und kostengünstigen Dichtungen C verbessert die Kehle 3 somit die Verbindung und Abdichtung erfindungsgemäßer Betonerzeugnisse und ermöglicht einen Verzicht auf teure und empfindliche Dichtungen.

In Figur 1 ist ferner zu erkennen, daß der durchmesserreduzierte Wandabschnitt 1 des ersten Betonerzeugnisses sowie der gegerüberliegende Wandabschnitt 5 des zweiten Betonerzeugnisses jeweils konisch ausgebildet sind.

In Fig. 3 ist eine Variante des zuvor beschriebenen Ausführungsbeispiels dargestellt.

Bei dieser Variante ist auch der Absatz des Verbindungsabschnittes A' des oberen Betonerzeugnisses mit einer Kehle 13 versehen, in die eine Ringdichtung C' eingelegt ist. Auf diese Weise kann eine doppelte Abdichtung bzw. eine verbesserte Dämpfung erzielt werden.

In Fig. 3 ist ferner eine abweichende Ausgestaltung des Wandabschnittes 5 gezeigt, die dadurch gekennzeichnet ist, daß im Übergangsbereich zur Stirnseite eine umlaufende, absatzförmige Ausnehmung 4' ausgebildet ist. Hierdurch ergibt sich eine größere Anlagefläche für die Ringdichtung C und damit eine noch bessere Abdichtung und Dämpfung zwischen den Wandabschnitten 1 und 5.

Die Erfindung beschränkt sich nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch machen.

Es ist zum Beispiel auch möglich, die Ringdichtungen c bzw. C' für besondere Anforderungen mit anderen bekannten Dichtungsarten zu kombinieren; außerdem ist es möglich, daß die Kehlen 3 bzw. 13 eine andere als die dargestellte Form aufweisen.

## Patentansprüche

1. Betonerzeugnis mit einem Verbindungsabschnitt (A bzw. B) in Form eines ringförmigen innen- oder außenliegenden Absatzes, dadurch gekennzeichnet, daß der Absatz mit einer Kehle (3, 13) versehen ist, in die eine Ringdichtung (C, C') einlegbar ist.

2. Betonerzeugnis nach Anspruch 1, dadurch gekennzeichnet, daß der außenliegende Absatz durch einen durchmesserreduzierten, konisch ausgebildeten Wandabschnitt (1) gebildet ist.

3. Betonerzeugnis nach Anspruch 1 oder 2, dadurch gekennzeichnet, daß der innenliegende Absatz durch eine nach außen konisch erweiterte Ausnehmung gebildet ist.

4. Betonerzeugnis nach den Ansprüchen 2 und 3, dadurch gekennzeichnet, daß dessen Verbindungsabschnitt (A bzw. B) mit Spiel an einen komplementär ausgebildeten Verbindungsabschnitt (B bzw. A) eines zweiten Betonerzeugnisses anschließbar ist, wobei das Spiel zwischen dem durchmesserreduzierten, konisch ausgebildeten Wandabschnitt (1) und dem gegenüberliegenden Wandabschnitt (5) der nach außen konisch erweiterten Ausnehmung besteht.

5. Betonerzeugnis nach Anspruch 4, dadurch gekennzeichnet, daß die Ringdichtung (C, C') nach Anschluß des zweiten Betonerzeugnisses teilweise zwischen dem durchmesserreduzierten, konisch ausgebildeten Wandabschnitt (1) und dem gegenüberliegenden Wandabschnitt (5) der nach außen konisch erweiterten Ausnehmung zusammengedrückt angeordnet ist.
